# EUROPEAN PATENT APPLICATION

(11) **EP 1 548 302 A1**
(43) Date of publication of application: **29.06.2005**
(21) Application number: 03794208.3
(22) Date of filing: 03.09.2003
(51) Int. Cl.: F16C 32/04

(54) **MAGNETIC BEARING DEVICE**

(30) Priority: 03.09.2002 JP 2002258229; 16.04.2003 JP 2003112087
(71) Applicant: SEIKO EPSON CORPORATION, Shinjuku-ku, Tokyo 163-0811 (JP)
(72) Inventor: TAKEUCHI, Kesatoshi, c/oSeiko Epson Corporation, Suwa-shi, Nagano 392-8502 (JP)
(74) Representative: Hoffmann, Eckart, Dipl.-Ing.
(86) International application number: PCT/JP2003/011262
(87) International publication number: WO 2004/022988

(57) **Abstract**

A magnetic bearing device comprises a rotary bearing (20) fixed to a rotary shaft (10) and a fixed bearing (30) that supports the rotary bearing (20) in non-contacting fashion. The rotary bearing (20) comprises a permanent magnet of convex cross-section formed with a convex portion towards the thrust direction of the rotary shaft (10). The fixed bearing (30) comprises a permanent magnet of concave cross-section formed with a concave portion capable of fitting the convex portion and formed in the concave portion with a through-hole (35) for insertion of the rotary shaft (10) therethrough. The rotary shaft (10) is supported in non-contacting fashion by the magnetic repulsive force that acts between the rotary bearing (20) and the fixed bearing (30) when the convex portion of the rotary bearing (20) is made to face the concave portion of the fixed bearing (30) so as to fit therein with a minute gap.

## Description

### CROSS-REFERENCES

The present invention relates to a magnetic bearing device whereby a rotary shaft is supported in non-contacting fashion with respect to a fixed bearing, by utilizing the magnetic repulsive force of a permanent magnet, and in particular relates to an improved technique for improving the precision of the shaft axis.

### BACKGROUND

Magnetic bearings in which a rotary shaft is supported in non-contacting fashion by utilizing magnetic repulsive force have previously been proposed as bearings for the rotary shaft of for example a motor. The magnetic bearing disclosed in Laid-open Japanese Patent Application No. H. 6-241229 has a construction wherein two sets of twinned coaxial magnetic bodies comprising two permanent magnets coupled such that like poles mutually face each other are arranged respectively facing the inner circumferential surface of a bearing fixed portion and outer circumferential surface of a rotary shaft with a slight gap there between and slightly offset in the thrust direction. With such a construction, since a plurality of repulsive magnetic field points are produced along the thrust direction of the rotary shaft, an action can be produced whereby the rotary shaft is biased in the thrust direction by the component of the magnetic repulsive force in the thrust direction and positional location of the thrust direction can be performed by providing a stop at the shaft end; in addition, the rotary shaft is supported in stable fashion by the action of the components of the magnetic repulsive force in the radial direction generated from the plurality of repulsive magnetic field points that are provided at intervals in the thrust direction; the precision of the shaft axis can thereby be increased.

However, although, if twinned magnetic bodies are arranged along the axial direction of the rotary shaft, a rotary shaft can be supported in stable fashion by the strong magnetic repulsive force produced from the plurality of repulsive magnetic field points, because of the construction in which twinned magnetic bodies are arranged along the thrust direction, the bearing device becomes bulky, so it is necessary to make this construction more compact in size so as to be suitable for use in bearing devices such as those of small-size precision mechanisms.

### SUMMARY

An object of the present invention is therefore to provide a magnetic bearing device wherein the size of the bearing device can be made compact and which is of high shaft axis precision. A further object of the present invention is to provide a magnetic bearing device which combines the functions of a radial bearing and a thrust bearing.

In order to solve the above problems, a magnetic bearing device according to the present invention consists in a magnetic bearing device comprising a rotary bearing fixed to a rotary shaft and a fixed bearing that supports the rotary bearing in non-contacting fashion, wherein the rotary bearing comprises a permanent magnet of convex cross-section formed with a convex portion towards the thrust direction of the rotary shaft and the fixed bearing comprises a permanent magnet of concave cross-section formed with a concave portion capable of fitting the convex portion and formed in the concave portion with a through-hole for insertion of the rotary shaft therethrough, the rotary shaft being supported in non-contacting fashion by the magnetic repulsive force that acts between the rotary bearing and the fixed bearing when the convex portion of the rotary bearing is made to face the concave portion of the fixed bearing so as to fit therein with a minute gap.

With such a construction, by making the opposing areas of the rotary bearing and the fixed bearing large, a large magnetic repulsive force can be achieved, so the magnetic bearing device can be made compact in size.

Preferably, the cross-sectional shape when the rotary bearing is sectioned in a plane parallel with the thrust direction of the rotary shaft is a curve such that, when the convex portion of the rotary bearing is made to face the concave portion of the fixed bearing so as to fit therein with a minute gap, the thrust direction component of the magnetic repulsive force in the vicinity of the apex of the convex portion is the main component, while, in the vicinity of the root of the convex portion, the radial direction component of the magnetic repulsive force is the main component.

With such a construction, precision of the shaft axis can be increased, since the function of a radial bearing and of a thrust bearing can be achieved by a single bearing.

Preferably the cross-sectional shape when the rotary bearing is sectioned in a plane parallel with the thrust direction of the rotary shaft and the cross-sectional shape when the fixed bearing is sectioned in this plane are similar.

With such a construction, a powerful magnetic repulsive force can be obtained by making the gap between the rotary bearing and the fixed bearing as minute as possible.

Preferably, the curve of the cross-section when the rotary bearing is sectioned in a plane parallel with the thrust direction of the rotary bearing is a parabola.

By making the shape of the curve of the cross-section a parabola, when the convex portion of the rotary bearing is made to face the concave portion of the fixed rotary bearing so as to fit therein with a minute gap, the thrust direction component of the magnetic repulsive force in the vicinity of the apex of the convex portion becomes the main component, while, in the vicinity of the root of the convex portion, the radial direction component of the magnetic repulsive force becomes the main component. In order to obtain such a cross-section, the cross-sectional shape may be made of U-shaped cross-section or may be made of semicircular cross-section.

Also, if the rotary bearing and fixed bearing are combined such that unlike poles face each other, magnetic repulsive force acts between these two when the fixed bearing and the rotary bearing are brought together to the limit, so the rotary bearing can be supported in non-contacting condition in a very closely adjacent condition.

Also, if the rotary bearing and fixed bearing are combined such that like poles face each other, the rotary bearing can be supported in non-contacting condition in which a certain margin is applied in regard to the distance between the fixed bearing and the rotary bearing.

It should be noted that a magnetic bearing device according to the present invention could be constituted with the concave/convex relationship of the rotary bearing and fixed bearing described above reversed.

### DESCRIPTION OF DRAWINGS

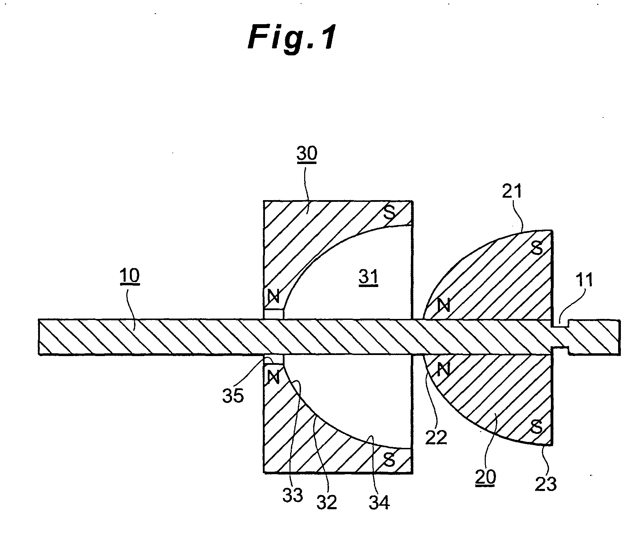

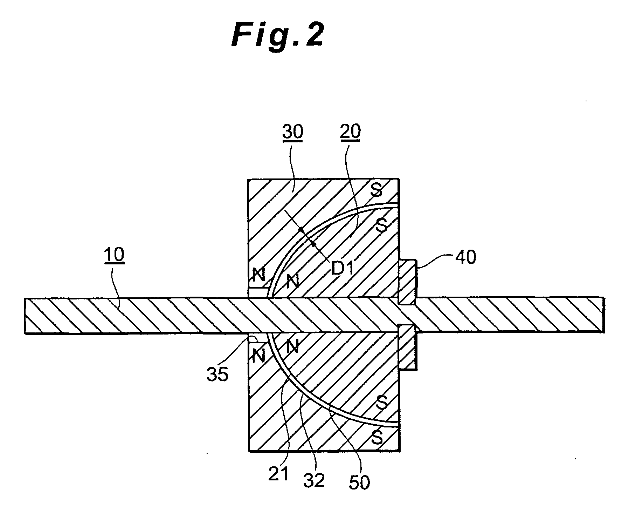

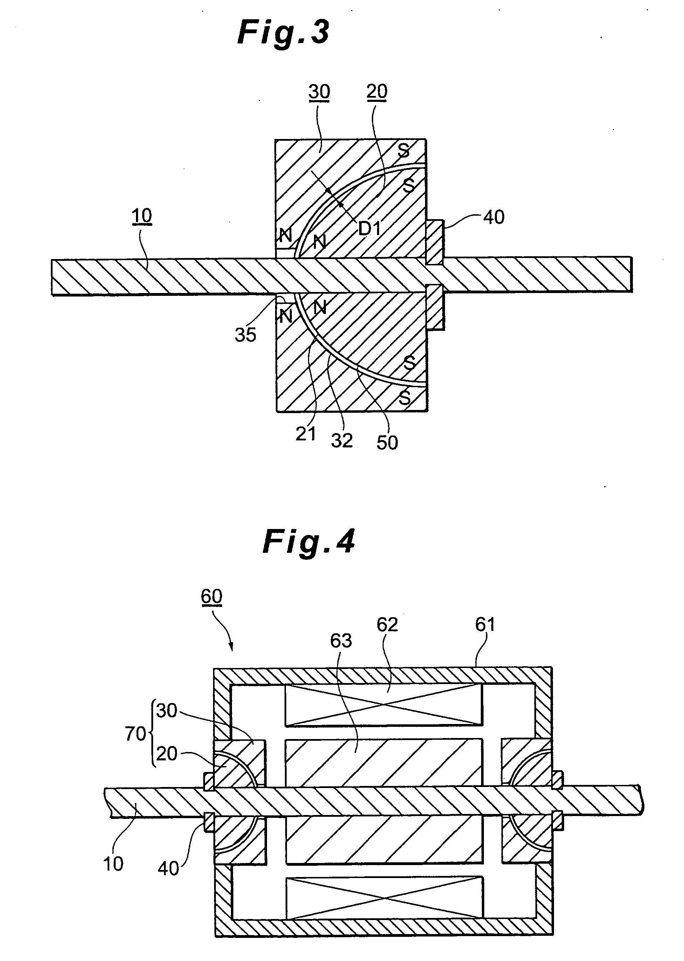

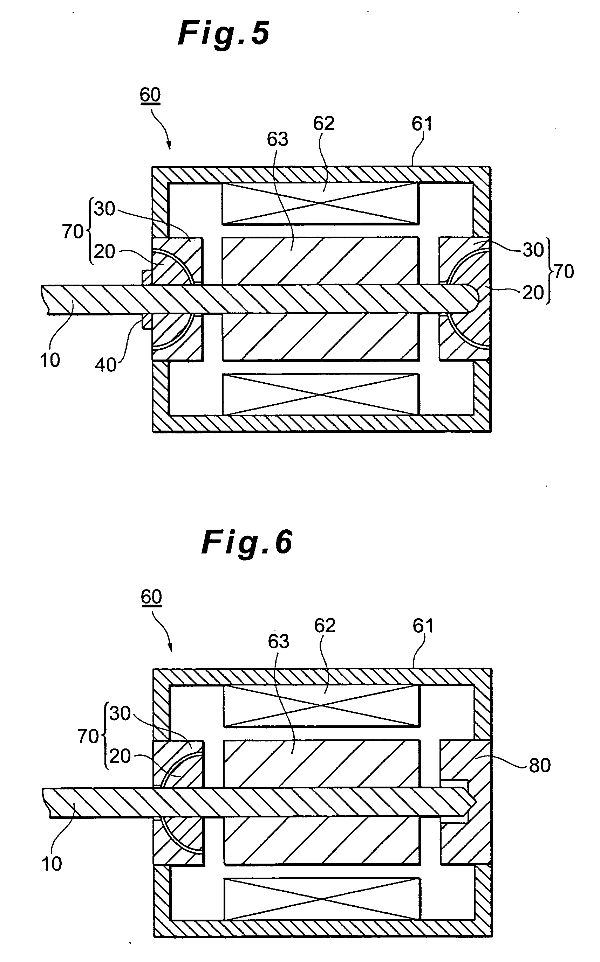

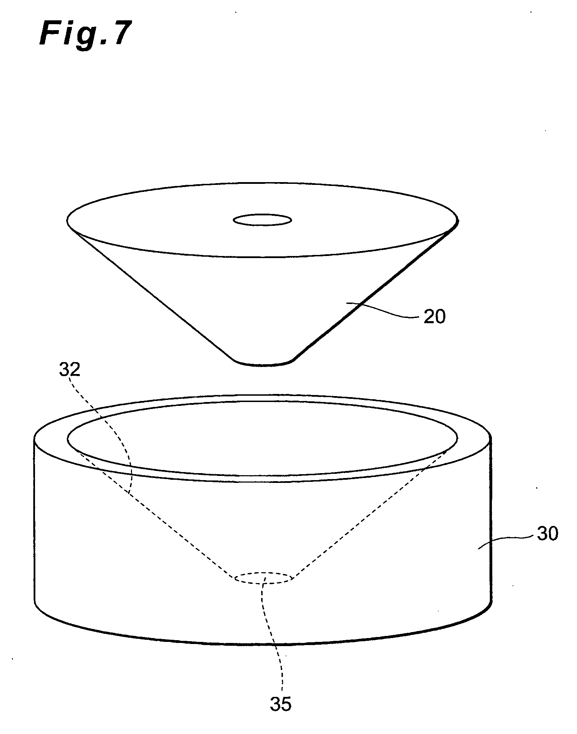

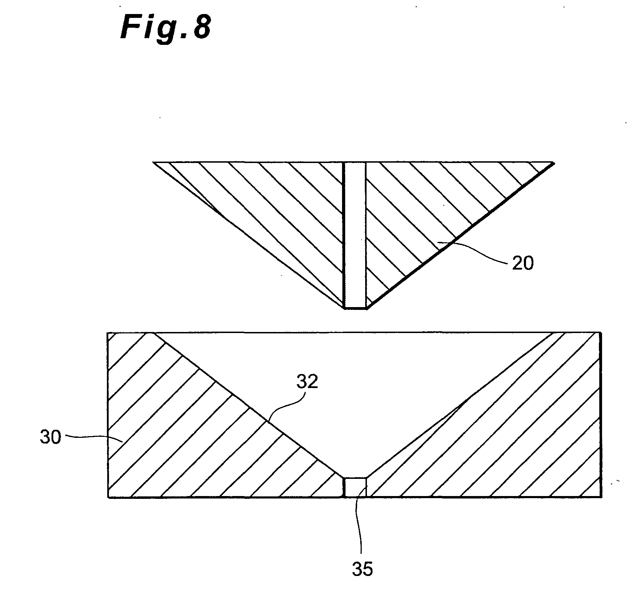

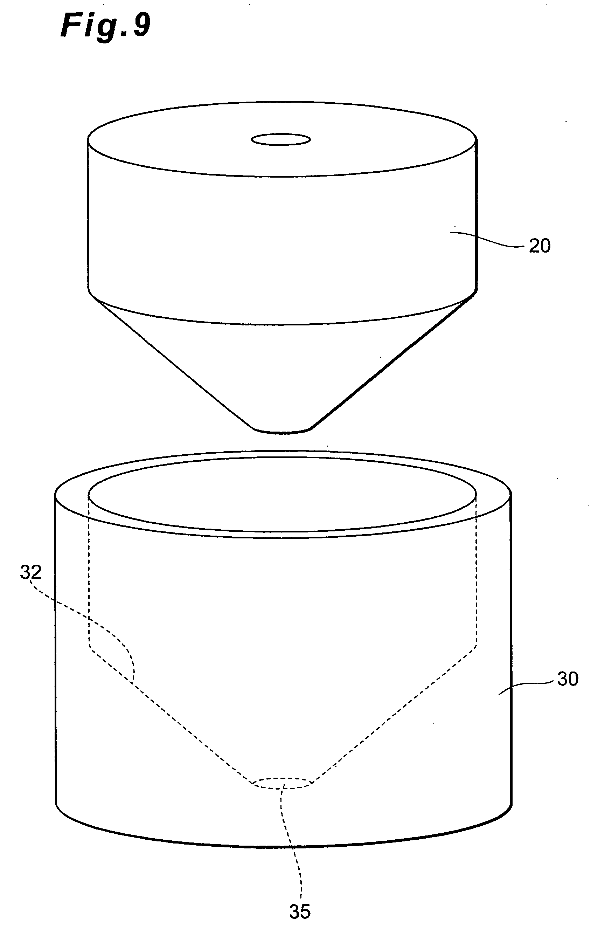

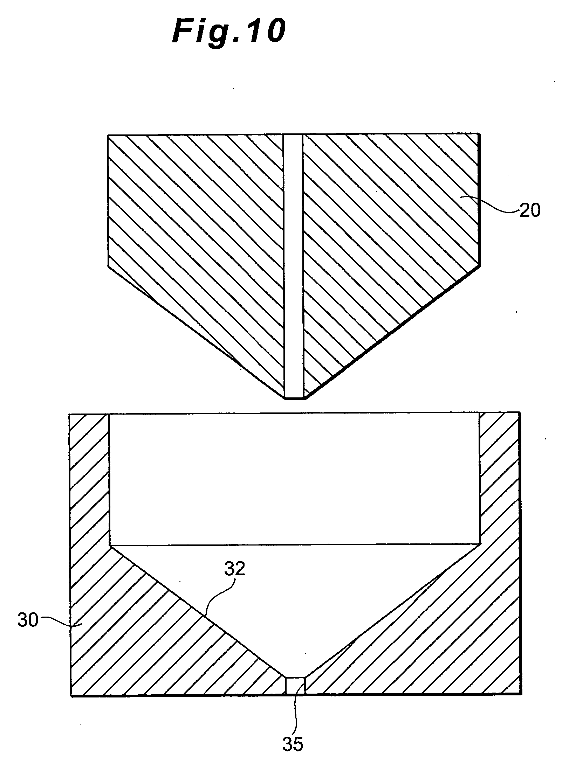

Figure 1 is a cross-sectional constructional view of a magnetic bearing device according to the present invention. Figure 2 is a cross-sectional constructional view of a magnetic bearing device according to the present invention. Figure 3 is a cross-sectional constructional view of a magnetic bearing device according to the present invention. Figure 4 is a cross-sectional view of an electric motor to which a magnetic bearing device according to the present invention has been applied. Figure 5 is a cross-sectional view of an electric motor to which a magnetic bearing device according to the present invention has been applied. Figure 6 is a cross-sectional view of an electric motor to which a magnetic bearing device according to the present invention has been applied. Figure 7 is a modified example of a rotary bearing and a fixed bearing according to the present invention. Figure 8 is a cross-sectional view of Figure 7. Figure 9 is a modified example of a rotary bearing and a fixed bearing according to the present invention. Figure 10 is a cross-sectional view of Figure 9.

### DETAILED DESCRIPTION

A preferred embodiment of the present invention is described below with reference to the drawings. Figure 1 is a cross-sectional constructional view of a magnetic bearing device according to the present embodiment. In the drawings, 10 is a rotary shaft that rotates at high speed, being supplied with rotary torque that is output from a source of motive power such as an electric motor; 20 is a rotary bearing that rotates with the rotary shaft 10; and 30 is a fixed bearing that is fixed for example to the motor housing. The fixed bearing 30 is a fixed member of cylindrical shape comprising a permanent magnet; at one end face thereof there is provided a recessed section 31 such that the cross-section when sectioned in a plane parallel with the thrust direction of the rotary shaft 10 constitutes a parabola; at the other end face thereof there is formed a through-hole 35 linking the inside and outside of the bearing, from a location corresponding to the apex 33 of the recessed section 31. The internal diameter of the through-hole 35 is designed such that the rotary shaft 10 can be inserted through the through-hole 35, being processed by cutting away so as to have a somewhat larger value than the external diameter of the rotary shaft 10.

As can be seen from the fact that the inner circumferential surface 32 of the recessed section 31 is of parabolic cross-section, the end face of the fixed bearing 30 has a construction produced by boring in substantially conical shape, being processed by cutting such that the curvature of the cross-sectional shape in the vicinity of the apex 33 of the parabola changes gradually, but the curvature of the cross-sectional shape at a location somewhat separated from the apex 33 in the radial direction changes abruptly; and such that, in the vicinity of the root 34, which is further separated from the apex 33 in the radial direction, the change of curvature of the cross-sectional shape becomes gradual. The rotary bearing 20 is a bearing member for fixing to the rotary shaft and comprises a permanent magnet; the rotary shaft 10 passes through a through-hole formed with an internal diameter that is substantially the same as that of the rotary shaft 10, so that high-speed rotation can be performed with the rotary shaft 10 as a result of rotary torque supplied from the motive power source, not shown. A groove 11 is formed in the circumferential direction in the rotary shaft 10 so that the rotary bearing 20 may be engaged with the rotary shaft 10 using engagement means such as an O-ring or E-ring.

The rotary bearing 20 is processed to have a shape having a convex portion capable of fitting with the recessed section 31 and so has a substantially conical shaped external circumferential surface 21. That is, the rotary bearing 20 is substantially a cone whereof the apex is directed in the thrust direction of the rotary shaft 10. Processing is effected such that the parabola that constitutes the cross-sectional shape of the external circumferential surface 21 is of curvature that changes gradually in the vicinity of the apex 22, but the curvature of the cross-sectional shape at a location somewhat separated from the apex 22 in the radial direction changes abruptly; and such that, in the vicinity of the root 23, which is further separated from the apex 22 in the radial direction, the change of curvature of the cross-sectional shape becomes gradual.

The combination of the polarities of the rotary bearing 20 and the fixed bearing 30 may be a first combination in which like poles face each other or a second combination in which unlike poles face each other. The construction shown in Figure 1 illustrates the first combination. As shown in this Figure, processing is effected such that the magnetic pole in the vicinity of the apex 33 of the fixed bearing 30 and the magnetic pole in the vicinity of the root 34 thereof are of opposite polarity and the magnetic pole in the vicinity of the apex 22 of the rotary bearing 20 and the magnetic pole in the vicinity of the root 23 thereof are of opposite polarity. Also, processing is effected such that the magnetic pole in the vicinity of the apex 33 of the fixed bearing 30 and the magnetic pole in the vicinity of the apex 22 of the rotary bearing 20 are of the same polarity and processing is effected such that the magnetic pole in the vicinity of the root 34 of the fixed bearing 30 and the magnetic pole in the vicinity of the root 23 of the rotary bearing 20 are of the same polarity. Examples of such combinations of magnetic poles are a combination (corresponding to Figure 1) in which the magnetic poles in the vicinity of the apex 33 and in the facility of the apex 22 are N poles and the magnetic poles in the vicinity of the root 34 and in the vicinity of the root 23 are S poles, and a combination (not shown) in which the magnetic poles in the vicinity of the apex 33 and in the vicinity of the apex 22 are S poles and the magnetic poles in the vicinity of the root 34 and in the vicinity of the root 23 are N poles.

Figure 2 is a cross-sectional view showing the situation when the concave and convex shapes of the rotary bearing 20 and fixed bearing 30 face each other so as to fit together with a minute gap 50. When these two are made to face each other with a minute gap 50, the rotary shaft 10 is supported in non-contacting fashion by means of the action of the magnetic repulsive force. Since the inner circumferential surface 32 of the fixed bearing 30 and the outer circumferential surface 21 of the rotary bearing 20 are formed in substantially conical shape such that their cross-section is of parabolic form, magnetic repulsive force whose main component is component in the thrust direction acts in the vicinity of the apex 33 and the vicinity of the apex 22, providing the function of a thrust bearing, whereas magnetic repulsive force whose main component is in the radial direction acts in the vicinity of the root 34 and the vicinity of the root 23, providing the function of a radial bearing. In this way, thrust vibration and radial vibration of the rotary shaft 10 are suppressed, making it possible to ensure a high degree of precision of the shaft axis. The gap 50 is set at a distance such that the weight of the rotary shaft 10 can be supported while setting a necessary and sufficient amount of play such that the rotary bearing 20 and fixed bearing 30 do not come into mutual contact. Also, since, in the first combination in which like poles are facing, the polarity of the root 34 of the fixed bearing 30 and the polarity of the apex 22 of the rotary bearing 20 are opposite, attractive force acts between these so the rotary bearing 20 can easily be inserted into the recessed section 31.

In contrast, in the second combination, in which unlike poles are facing, an arrangement as shown in Figure 3 is produced. In this case, the apex 33 and the root 23 are N poles and the apex 22 and root 34 are S poles. Of course, the apex 33 and the root 23 could be made to be S poles and the apex 22 and root 34 made to be N poles. In such a combination, when the rotary bearing 20 is inserted into the recessed section 31, when the apex 22 is positioned in the vicinity of the root 34, magnetic repulsive force acts between the rotary bearing 20 and the fixed bearing 30, but, when the apex 22 and the apex 33 approach to the limit, magnetic repulsive force starts to act between these two, so that the rotary bearing 20 is supported in non-contacting condition. If we designate the distance between the rotary bearing 20 and the fixed bearing 30 in the first combination described above as D1 (see Figure 2) and the distance between the rotary bearing 20 and the fixed bearing 30 in the second combination as D2 (see Figure 3), D1 can be made > D2. Thus it can be seen that when the rotary bearing 20 and fixed bearing 30 are supported in non-contacting condition in a condition in which they have been made to approach to the limit, the second combination is suitable, whereas, when the rotary bearing 20 and fixed bearing 30 are supported in a non-contacting condition in a condition in which a certain margin is provided, the first combination is suitable.

Thus, by making the fixed bearing 30 a concave member of parabolic cross-sectional shape and by making the rotary bearing 20 a convex member of parabolic cross-sectional shape, the facing areas of the concave and convex portions constituting the bearing device can be made large, so the overall total of the magnetic repulsive force acting on the rotary shaft 10 can be made as large as possible while making the bearing device compact in size; this bearing device is therefore ideal for a bearing device of a miniature precision electronic device. Also, a high degree of shaft axis precision can be ensured by the powerful magnetic repulsive force. Furthermore, whereas, in the conventional bearing construction, the typical arrangement was that thrust bearings and radial bearings were respectively separately provided, with the arrangement according to this embodiment, the function of thrust bearings and radial bearings can be achieved by a single bearing construction, so a reduction in the number of components and a lowering of manufacturing cost can be achieved and mechanical vibration can be suppressed.

Also, by employing permanent magnets in the rotary bearing 20 and fixed bearing 30, these bearings can be made to function as substantially semi-permanent magnetic bearings, so supply of power to an electromagnetic coil, as in the conventional magnetic bearings, is unnecessary. Also, by adopting a non-contacting support mechanism employing magnetic repulsive force, a lowering of loss of rotational energy, due to a reduction in mechanical vibration and due to decrease of the loss caused by friction between the rotating members and fixed members, can be achieved. Also, it should be noted that thanks to annular mounting of engagement means 40 such as an O-ring or E-ring on the rotary shaft 10, the rotary bearing 20 is engaged so as not to be displaced in the thrust direction by the action of the magnetic repulsive force.

Figure 4 to Figure 6 show an example of application of a magnetic bearing construction according to the present invention to an electric motor. In these Figures, members having the same reference symbols indicate identical items, so further description thereof is dispensed with. In the construction shown in Figure 4, an electric motor 60 comprises as chief constituents a magnetic bearing device 70 comprising a rotary bearing 20 and fixed bearing 30, a stator 62 that is fixed to the motor housing 61, and a rotor 63 that is rotated together with the rotary shaft 10 by engagement means 40. The stator 62 is fixed to the inner circumferential surface of the motor housing 61 and the rotor 63 is fixed in a position on the rotor shaft 10 facing the stator 62. The rotor shaft 10 has a biaxial drive construction and passes through both end faces of the electric motor 60, transmitting rotary torque to both sides of the motor. Magnetic bearing devices 70 are therefore provided at both end faces of the electric motor 60.

In contrast, Figure 5 shows a uniaxial drive arrangement. Although magnetic bearing devices 70 are provided at both ends faces of the electric motor 60, the rotary shaft 10 passes through one of these magnetic bearing devices 70 and terminates at the fixed bearing 30 of the other magnetic bearing device 70. Figure 6 shows another uniaxial drive arrangement, in which a shaft support member 80 that supports a rotary shaft 10 in normally contacting fashion is provided on the motor housing 61. Thus, since the rotor 63 is supported in non-contacting fashion by magnetic repulsive force, a construction is achieved that is unlikely to be affected by mechanical losses due to frictional resistance of the rotary shaft 10 and magnetic bearing device 70. In contrast to a bearing in which mechanical losses are generated, deterioration over a period of years can be suppressed, so a magnetic bearing device 70 can be provided that is of excellent durability and reliability.

It should be noted that, although, in the above description, it was assumed that the cross-sectional shape of the rotary bearing 20 and fixed bearing 30 was parabolic, there is no particular restriction on the shape, provided it is that of a curve such that, when the convex portion of the rotary bearing 20 is fitted into the concave portion of the fixed bearing 30 with a minute gap 50, the thrust direction component of the magnetic repulsive force in the vicinity of the apex 22 of the convex portion is the main component, while, in the vicinity of the root 23 of the convex portion, the radial direction component of the magnetic repulsive force is the main component. Preferred examples of such shapes are semi-elliptical cross-sectional shape, U-shaped cross-sectional shape, semicircular cross-sectional shape or tapered shape.

Figure 7 to Figure 10 show modified examples of the rotary bearing 20 and fixed bearing 30. Figure 7 is a perspective view showing the case where the facing surfaces of the rotary bearing 20 and the fixed bearing 30 are tapered and Figure 8 is a cross-sectional view thereof. Figure 9 is a perspective view showing the case where part of the facing surfaces of the rotary bearing 20 and the fixed bearing 30 are tapered and Figure 10 is a cross-sectional view thereof.

It should be noted that, although, in the above example, the rotary bearing 20 was made of convex cross-section and the fixed bearing 30 was made of concave cross-section, these could be reversed, with the rotary bearing 20 being made of concave cross-section and the fixed bearing 30 being made of convex cross-section. In other words, a magnetic bearing device according to the present invention can be produced even if the shape of the rotary bearing 20 and the shape of the fixed bearing 30 described above are exchanged.

A magnetic bearing device according to the present invention can be utilized for the bearings in for example electric automobiles, electric wheelchairs, electrically operated construction machinery, welfare equipment, electric robots, electrically operated toys, electrically operated airplanes, electrically operated precision instruments, and opto-electrical control equipment. As a specific example of application, it may be employed for example for the bearing of a sun gear constituting a planetary gear. Planetary gears are employed in various types of motive power system. For example, a planetary gear may be employed as a motive power division mechanism to distribute engine output to the drive wheels and generator in a hybrid vehicle using an internal combustion engine and electric motor as power sources. If a magnetic bearing device according to the present invention is employed in the sun gear, constituting the input shaft of the generator, the motive power energy can be converted to electrical energy with the lowest possible degree of mechanical loss.

## Claims

1. A magnetic bearing device comprising a rotary bearing fixed to a rotary shaft and a fixed bearing that supports said rotary bearing in non-contacting fashion, wherein
said rotary bearing comprises a permanent magnet of convex cross-section formed with a convex portion towards the thrust direction of said rotary shaft,
said fixed bearing comprises a permanent magnet of concave cross-section formed with a concave portion capable of fitting said convex portion and formed in said concave portion with a through-hole for insertion of said rotary shaft therethrough,
said rotary shaft is supported in non-contacting fashion by the magnetic repulsive force that acts between said rotary bearing and fixed bearing when the convex portion of said rotary bearing is made to face the concave portion of said fixed bearing so as to fit therein with a minute gap.

2. The magnetic bearing device according to claim 1, wherein the cross-sectional shape when said rotary bearing is sectioned in a plane parallel with the thrust direction of said rotary shaft is a curved shape such that, when the convex portion of said rotary bearing is made to face the concave portion of said fixed bearing so as to fit therein with a minute gap, the thrust direction component of the magnetic repulsive force in the vicinity of the apex of said convex portion is the main component, while, in the vicinity of the root of said convex portion, the radial direction component of the magnetic repulsive force is the main component.

3. The magnetic bearing device according to claim 1 or 2, wherein the cross-sectional shape when said rotary bearing is sectioned in a plane parallel with the thrust direction of said rotary shaft and the cross-sectional shape when said fixed bearing is sectioned in said plane are similar.

4. A magnetic bearing device comprising a rotary bearing fixed to a rotary shaft and a fixed bearing that supports said rotary bearing in non-contacting fashion, wherein
said rotary bearing comprises a permanent magnet of concave cross-section formed with a concave portion towards the thrust direction of said rotary shaft,
said fixed bearing comprises a permanent magnet of convex cross-section formed with a convex portion capable of fitting said concave portion and formed in said convex portion with a through-hole for insertion of said rotary shaft therethrough,
said rotary shaft is supported in non-contacting fashion by the magnetic repulsive force that acts between said rotary bearing and fixed bearing when the concave portion of said rotary bearing is made to face the convex portion of said fixed bearing so as to fit therein with a minute gap.

5. The magnetic bearing device according to claim 4, wherein the cross-sectional shape when said rotary bearing is sectioned in a plane parallel with the thrust direction of said rotary shaft is a curved shape such that, when the concave portion of said rotary bearing is made to face the convex portion of said fixed bearing so as to fit therein with a minute gap, the thrust direction component of the magnetic repulsive force in the vicinity of the apex of said convex portion is the main component, while, in the vicinity of the root of said convex portion, the radial direction component of the magnetic repulsive force is the main component.

6. The magnetic bearing device according to claim 4 or 5, wherein the cross-sectional shape when said rotary bearing is sectioned in a plane parallel with the thrust direction of said rotary shaft and the cross-sectional shape when said fixed bearing is sectioned in said plane are similar.

7. The magnetic bearing device according to claim 2 or 5, wherein said curved shape is a parabola.

8. The magnetic bearing device according to claim 2 or 5, wherein said cross-sectional shape is of U-shaped cross-section or of semicircular cross-section.

9. The magnetic bearing device according to any of claims 1 to 8, wherein said rotary bearing and said fixed bearing are combined such that unlike poles face each other.

10. The magnetic bearing device according to any of claims 1 to 8, wherein said rotary bearing and said fixed bearing are combined such that like poles face each other.

## Amended claims

### Amended claims under Art. 19.1 PCT

**1.** (Amended) A magnetic bearing device comprising a rotary bearing fixed to a rotary shaft and a fixed bearing that supports said rotary bearing in non-contacting fashion, wherein
said rotary bearing comprises a permanent magnet of convex cross-section formed with a convex portion towards the thrust direction of said rotary shaft,
said fixed bearing comprises a permanent magnet of concave cross-section formed with a concave portion capable of fitting said convex portion and formed in said concave portion with a through-hole for insertion of said rotary shaft therethrough,
said rotary shaft is supported in non-contacting fashion by the magnetic repulsive force that acts between said rotary bearing and fixed bearing when the convex portion of said rotary bearing is made to face the concave portion of said fixed bearing so as to fit therein with a minute gap, and
the curve of the cross-section when the rotary bearing is sectioned in a plane parallel with the thrust direction of said rotary shaft is a parabola.

**2.** The magnetic bearing device according to claim 1, wherein the cross-sectional shape when said rotary bearing is sectioned in a plane parallel with the thrust direction of said rotary shaft is a curved shape such that, when the convex portion of said rotary bearing is made to face the concave portion of said fixed bearing so as to fit therein with a minute gap, the thrust direction component of the magnetic repulsive force in the vicinity of the apex of said convex portion is the main component, while, in the vicinity of the root of said convex portion, the radial direction component of the magnetic repulsive force is the main component.

**3.** The magnetic bearing device according to claim 1 or 2, wherein the cross-sectional shape when said rotary bearing is sectioned in a plane parallel with the thrust direction of said rotary shaft and the cross-sectional shape when said fixed bearing is sectioned in said plane are similar.

**4.** (Amended) A magnetic bearing device comprising a rotary bearing fixed to a rotary shaft and a fixed bearing that supports said rotary bearing in non-contacting fashion, wherein
said rotary bearing comprises a permanent magnet of concave cross-section formed with a concave portion towards the thrust direction of said rotary shaft,
said fixed bearing comprises a permanent magnet of convex cross-section formed with a convex portion capable of fitting said concave portion and formed in said convex portion with a through-hole for insertion of said rotary shaft therethrough,
said rotary shaft is supported in non-contacting fashion by the magnetic repulsive force that acts between said rotary bearing and fixed bearing when the concave portion of said rotary bearing is made to face the convex portion of said fixed bearing so as to fit therein with a minute gap, and
the curve of the cross-section when the rotary bearing is sectioned in a plane parallel with the thrust direction of said rotary shaft is a parabola.

**5.** The magnetic bearing device according to claim 4, wherein the cross-sectional shape when said rotary bearing is sectioned in a plane parallel with the thrust direction of said rotary shaft is a curved shape such that, when the concave portion of said rotary bearing is made to face the convex portion of said fixed bearing so as to fit therein with a minute gap, the thrust direction component of the magnetic repulsive force in the vicinity of the apex of said convex portion is the main component, while, in the vicinity of the root of said convex portion, the radial direction component of the magnetic repulsive force is the main component.

**6.** The magnetic bearing device according to claim 4 or 5, wherein the cross-sectional shape when said rotary bearing is sectioned in a plane parallel with the thrust direction of said rotary shaft and the cross-sectional shape when said fixed bearing is sectioned in said plane are similar.

**7.** The magnetic bearing device according to claim 2 or 5, wherein said curved shape is a parabola.

**8.** The magnetic bearing device according to claim 2 or 5, wherein said cross-sectional shape is of U-shaped cross-section or of semicircular cross-section.

**9.** The magnetic bearing device according to any of claims 1 to 8, wherein said rotary bearing and said fixed bearing are combined such that unlike poles face each other.

**10.** The magnetic bearing device according to any of claims 1 to 8, wherein said rotary bearing and said fixed bearing are combined such that like poles face each other.
